Europäisches Patentamt

European Patent Office

Office européen des brevets

(19)

(11) Publication number: **0 211 554 B1**

# EUROPEAN PATENT SPECIFICATION

(12)

(45) Date of publication of patent specification: 06.11.91    (51) Int. Cl.⁵: **H04B 1/20, H04N 5/44**

(21) Application number: 86305547.1

(22) Date of filing: 18.07.86

(54) Digital bus control system.

(30) Priority: 20.07.85 JP 161004/85

(43) Date of publication of application:
25.02.87 Bulletin 87/09

(45) Publication of the grant of the patent:
06.11.91 Bulletin 91/45

(84) Designated Contracting States:
**AT DE FR GB NL**

(56) References cited:
**US-A- 3 984 819**
**US-A- 4 456 965**

**PATENT ABSTRACTS OF JAPAN, vol. 6, no.
27 (P-102)[905], 17th February 1982; & JP-
A-56 145 443**

**PATENT ABSTRACTS OF JAPAN, vol. 6, no.
27 (P-102)[905], 17th February 1982; & JP-
A-56 145 452**

**PATENT ABSTRACTS OF JAPAN, vol. 6, no.
27 (P-102)[905], 17th February 1982; & JP-
A-56 145 454**

(73) Proprietor: **SONY CORPORATION**
**7-35 Kitashinagawa 6-Chome Shinagawa-ku**
**Tokyo 141(JP)**

(72) Inventor: **Mogi, Takao**
**c/o Sony Corporation - 7-35 Kitashinagava
6-chome Shinagawa-ku,Tokyo(JP)**
Inventor: **Keiji, Yuzawa**
**c/o Sony Corporation 7-35 Kitashinagawa
6-chome
Shinagawa-ku Tokyo(JP)**
Inventor: **Yoshinori, Komiya**
**c/o Sony Corporation 7-35 Kitashinagawa
6-chome
Shinagawa-ku Tokyo(JP)**
Inventor: **Masayuki, Suematsu**
**c/o Sony Corporation 7-35 Kitashinagawa
6-chome
Shinagawa-ku Tokyo(JP)**
Inventor: **Fujio, Tanoue**
**c/o Sony Corporation 7-35 Kitashinagawa
6-chome
Shinagawa-ku Tokyo(JP)**

(74) Representative: **Ayers, Martyn Lewis Stanley
et al
J.A. KEMP & CO. 14 South Square Gray's Inn
London, WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a digital control bus system wherein function blocks included in electronic equipment are connected through bus lines to allow signal transmission therebetween. More particlarly, the present invention relates to a digital control bus system which inter-connects digitally controllable ICs installed in an electronic equipment.

Most video/audio equipment such as television receivers, VTRs, and tape recorders that use digitally controllable ICs employ an inner bus system. In a conventional inner bus system, electronic equipment includes a CPU, an inner bus, and a ROM as a control block. The control program for the respective circuits is stored in the ROM. In normal operation, the program is read out by the CPU and control signals are supplied to a predetermined circuit through the inner bus so that the corresponding digitally controllable IC performs a predetermined operation. These ICs are also controlled by a keyboard or a remote controller through the CPU and the inner bus.

A conventional inner bus is described as a two-line system consisting of a data transmission line and a clock transmission line in Japanese Patent Application laid open No. 57-106262.

For example, in a conventional TV set utilizing an inner bus system, a channel selection microprocessor, a non-volatile memory for storing control data, and a signal processing IC including a video processor and an audio processor are connected through a two-line inner bus. If a channel selection command is externally supplied to the TV set, the channel selection microprocessor reads out present data corresponding to the selected channel from the memory and transmits the present data to the signal processing IC. The channel selection microprocessor thus performs channel selection so as to receive a predetermined reception signal.

In another conventional VTR built-in TV set as a kind of composite video/audio equipment utilizing an inner bus system, a TV block and a VTR block are controlled by a key/remote controller decoder of a microprocessor through an inner bus.

In the above inner bus systems, an inner bus is commonly used in single electronic equipment. The bus is used (occupied) by time division processing. The bus cannot be used for simultaneous processing. For this reason, various operational limits and inconvenience result.

In the above TV set with the remote controller function, the channel selection microprocessor and the non-volatile memory are always supplied with an operating power from a subsidiary power supply. A main operating power is supplied to the signal processing IC upon ON/OFF operation of the power switch in a remote commander. In a remote controller standby mode, the main power to the signal processing IC is off to OV or grounded and the TV set waits to receive an operation command from the remote commander.

In this state, the common inner bus is also grounded and the channel selection microprocessor cannot access the non-volatile memory through the inner bus. For example, if the signal processing IC has a surge protection diode at an input end connected to the inner bus, the cathode of the protection diode connected to the power source is grounded, and the inner bus is thereby grounded.

Once the remote controller standby mode is set after, e.g., a power failure, a "last power flag" representing the TV operation mode immediately prior to the power failure cannot be read out from a memory area at the corresponding address of the non-volatile memory. As a result, the status prior to the power failure cannot be restored.

In the VTR built-in TV set, while the TV block occupies the bus to perform internal processing, the key/remote controller decoder cannot send a signal to the VTR block. In addition, the VTR block cannot use the inner bus to perform its internal processing.

Furthermore, the following problem also exists due to common use of the bus. A master controller sends both data and address signals for designating a slave device. In this case, if signal processing ICs (e.g., tuner ICs) having identical slave address in the TV and VTR blocks are provided, confusion should occur.

It is, therefore, an object of the present invention to improve utilization efficiency of the inner bus system while the inner bus disable state is prevented.

In order to achieve the above object of the present invention, there is provided a two-line type digital control bus sytem adapted for use in an audio-visual electronic apparatus, comprising:

a two-line type control bus having a clock line and a data line provided for connecting function blocks of said audio-visual electronic apparatus in order to transmit control data among said function blocks, and

switch means provided at said two-line type digital control bus for electrically disconnecting at least one of said function blocks from said two-line type digital control bus.

Fig. 1 is a block diagram of an inner bus system TV set according to an embodiment of the present invention;

Fig. 2 is a block diagram of a VTR built-in TV according to another embodiment of the present invention;

Fig. 3 is a block diagram of a bus switching system according to still another embodiment of the present invention; and

Fig. 4 is a block diagram of a bus disconnection system according to still another embodiment of the present invention.

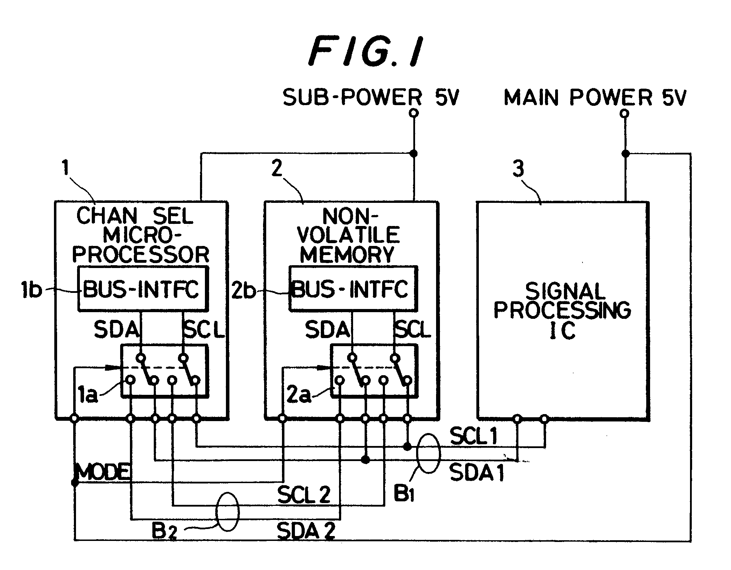

Fig. 1 shows an inner bus system TV set according to an embodiment of the present invention. An inner bus employs a double bus system consisting of first and second buses B1 and B2. The bus B1 consists of a data/address line SDA1 and a clock line SCL1. Similarly, the bus B2 consists of a data/address line SDA2 and a clock line SCL2. The bus B1 is commonly connected to a channel selection microprocessor 1, a non-volatile memory 2, and a signal processing IC 3. The bus B2 is commonly connected to the channel selection microprocessor 1 and the non-volatile memory 2.

Bus selection switches 1a and 2a are arranged in the channel selection microprocessor 1 and the non-volatile memory 2, respectively. The channel selection microprocessor 1 and the non-volatile memory 2 are selectively connected to either one of the buses through bus interfaces (BUS-INTFCs) 1b and 2b.

A 5V sub-power supply is supplied to the channel selection microprocessor 1 and the non-volatile memory 2. The signal processing IC 3 is operated with a main power supply of 5 V.

When the TV set is operated upon TV signal reception, a mode signal MODE representing power-on state is set at logic "1". In response to this signal, the bus selection switches 1a and 2a select the first bus B1 (SDA1 and SCL1), as shown in Fig. 1. Therefore, TV signal reception is controlled through the first bus B1.

In the remote controller standby mode, the main power of 5 V is no longer supplied to the signal procesing IC 3 and the mode signal goes to logic "0". The channel selection microprocessor 1 and the non-volatile memory 2 are supplied by the sub-power supply and held in the wait mode. In this case, the first bus B1 is also grounded upon power-off of the signal processing IC3 and cannot be used.

However, the bus selection switches 1a and 2a are switched in response to the mode signal of logic "0" so that the channel selection microprocessor 1 can communicate with the non-volatile memory 2. Therefore, even in the standby mode, the channel selection microprocessor 1 can read out data from the non-volatile memory 2. For example, the "last power flag" can be read out upon recovery from the power failure to restore the operation status immediately prior to the power failure.

It will be apparent from the foregoing that, on entering the powered-down mode, the signal processing IC3 is disconnected from the currently active bus (i.e. bus B2) by the switches 1a and 2a switching over from bus B1 to bus B2.

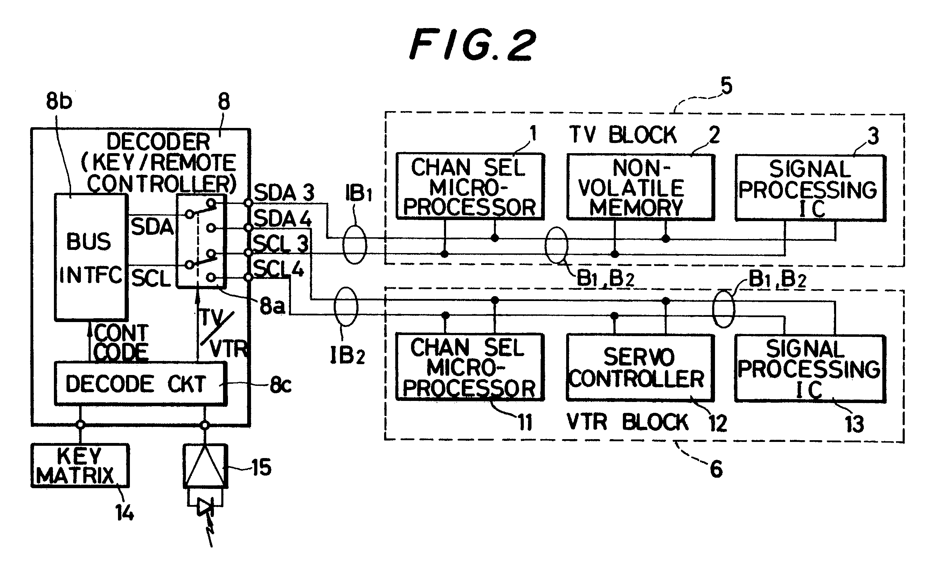

Fig. 2 shows another embodiment of the present invention. This embodiment exemplifies a TV + VTR combination product. A TV block 5 comprises a channel selection microprocessor 1, a non-volatile memory 2, and a signal processing IC 3 in the same manner as in Fig. 1. A VTR block 6 comprises a channel selection microprocessor 11, a servo controller 12, and a signal processing IC 13.

Each of the TV and VTR blocks 5 and 6 has a double bus system consisting of buses B1 and B2 in the same manner as in Fig. 1. The intrablock communication paths can be enabled even in the remote controller standby mode.

In addition, a high-order double bus system is also employed in the entire system. The bus from the key/remote controller decoder 8 as a controller consists of a first bus IB1 for TV block and a second bus IB2 for VTR block. Each of the buses IB1 and IB2 is branched into parallel buses B1 and B2 in each blocks 5 and 6 in the same manner with Fig. 1.

The bus IB1 consists of a data/address line SDA3 and a clock line SCL3. Similarly, the bus IB2 consists of a data/address line SDA4 and a clock line SCL4. The first and second buses IB1 and IB2 are switched by a bus selection switch 8a in the key/remote controller decoder 8 and connected to the internal circuit in the decoder 8 through a bus interface (BUS INTEC) 8B. An operation signal (control code) from a key matrix 14 on an electronic equipment panel surface or a remote controller receiver 15 is supplied to the decoder 8 through a decode circuit 8C and the bus interface 8b. At the same time, the decode circuit 8c outputs a TV/VTR mode signal upon operation of the key matrix 14 or the remote controller to cause the bus selection switch 8a to select one of the buses IB1 and IB2.

For example, the VTR is operated in the play mode in the following manner. The operator uses the key matrix or the remote controller to set the TV set in the VTR mode. In this case, the selection switch 8a is switched to the side of the first bus IB1. In this mode, the TV block 5 can receive a video RF signal. When the VTR is subsequently set in the play back mode, the selection switch 8a is switched to the side of the second bus IB2 and thus the VTR block 6 is set in the play back mode.

The TV and VTR blocks 5 and 6 can be controlled by the decoder 8 through the independent buses IB1 and IB2. Even if the TV block 5 continuously occupies the bus IB1 to perform its internal processing in the TV block 5, the communication path between the decoder 8 and the VTR block 6 is guaranteed through the bus IB2. Even if the ICs of an identical slave address are used in the TV and VTR blocks 5 and 6, the buses IB1 and IB2 are switched to easily identify the target slave device.

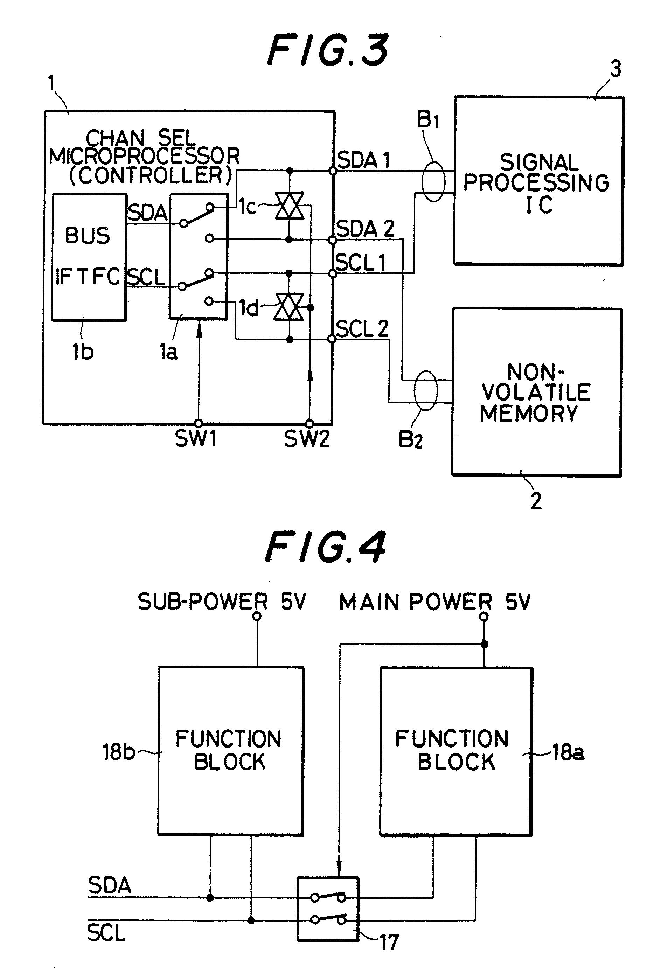

Fig. 3 shows still another embodiment of the present invention. The bus system in this embodiment is a compromise bus system between the double bus system of Fig. 1 and the exclusive bus system of Fig. 2. The inner bus (SDA and SCL) connected to a bus interface 1b in a channel selection microprocessor 1 is branched from a bus selection switch 1a into first and second buses B1 an B2 which are connected to a signal processing IC3 and a non-volatile memory 2. The bus selection switch 1a is controlled in response to a switching signal SW1 to selectively form independent communication paths by using the buses B1 and B2 as exclusive buses for the function blocks (3 and 2). For example, the ON/OFF of the main power is detected according to the operation mode to form the switching signal SW1 which is used to disconnect the bus B1 of the signal processing IC3 from the channel selection microprocessor 1 and the non-volatile memory 2.

Bidirectional switches 1c and 1d are arranged to short-circuit both the data/address lines SDA1 and SDA2 and both the clock lines SCL1 and SCL2 of the first and second buses B1 and B2, respectively. If the bidirectional switches 1c and 1d are turned on in response to a switching signal SW2, the buses B1 and B2 function as an integral bus which can be used as a common inner bus in the electronic equipment.

In order to disconnect the common bus line from a predetermined function block, a disconnection switch 17 shown in Fig. 4 may be arranged accordingly to still another embodiment. For example, when the 5V main power is no longer supplied to the IC 3 in the remote controller standby mode, the disconnection switch 17 is opened and a function block 18a can be disconnected from the common bus lines SA and SCL connected to another function block 18b. The disconnection switch 17 may be a switching element included in the function block 18a and may serve as a high impedance when the main power is off.

The present invention is not limited to the particular embodiments described above but can also be applied to a certain inner bus system having a timer standby function, for example.

According to the present invention as described above, when a predetermined function block is powered off, it is disconnected from the bus line. Therefore, the bus line is not forcibly grounded in the power off state. The communication between the remaining function blocks can be guaranteed.

## Claims

1. A two-line type digital control bus (B1, B2) having a clock line (SCL) and a data line (SDA) provided for connecting function blocks (1, 2, 3) of an audio-visual electronic apparatus in order to transmit control data among said function blocks, and

   switch means (1a, 2a) provided at said two-line type digital control bus for electrically disconnecting at least one of said function blocks from said two-line type digital control bus.

2. A digital control bus sytem according to claim 1, wherein said switch means is controlled in response to a main power supply applied to said at least one function block.

3. A digital control bus system according to claim 1 or 2, wherein said electronic apparatus has a first control bus and a second control bus and said switch means is operative to switch said at least one function block from said first control bus to said second control bus.

4. A digital control bus system according to claim 3, wherein said at least one function block includes said switch means between a bus interface and connecting terminals provided in said function block.

5. A digital control bus system according to claim 4, wherein said at least one function block further includes switch means which connects said first control bus with said second control bus.

6. A digital control bus system according to claim 5, wherein said latter mentioned switch means is provided between said first mentioned switch means and said connecting terminal of the function block.

7. A digital control system according to claim 1 wherein two buses are provided, said at least one function block being connected to one of the buses and the switch means being operable to selectively connect the other of the function blocks to the other one of the buses, thereby to electrically disconnect said at least one function block.

8. A digital control system according to claim 1, wherein the switch means is interposed between the at least one function block and the bus and is arranged to open or disconnect said at least one function block from the bus.

## Revendications

1. Bus de commande numérique du type à deux lignes (B1, B2) possédant une ligne d'horloge (SCL) et une ligne de données (SDA), destinées à connecter des blocs fonctionnels (1, 2, 3) d'un appareil électronique audiovisuel afin de transmettre des données de commande entre lesdits blocs fonctionnels, et

   un moyen de commutation (1a, 2a) placé sur ledit bus de commande numérique du type à deux lignes afin de déconnecter électriquement au moins un, considéré, desdits blocs fonctionnels vis-à-vis dudit bus de commande numérique du type à deux lignes.

2. Système de bus de commande numérique selon la revendication 1, où ledit moyen de commutation est commandé en fonction de l'application d'une alimentation électrique principale audit bus fonctionnel considéré.

3. Système de bus de commande numérique selon la revendication 1 ou 2, où ledit appareil électronique possède un premier bus de commande et un deuxième bus de commande, et ledit moyen de commutation a pour fonction de faire commuter ledit bloc fonctionnel considéré dudit premier bus de commande audit deuxième bus de commande.

4. Système de bus de commande numérique selon la revendication 3, où ledit bloc fonctionnel considéré comporte ledit moyen de commuation entre une interface de bus et des bornes de -connexion prévues dans ledit bloc fonctionnel.

5. Système de bus de commande numérique selon la revendication 4, où ledit bloc fonctionnel considéré comporte en outre un moyen de commutation qui connecte ledit premier bus de commande avec ledit deuxième bus de commande.

6. Système de bus de commande numérique selon la revendication 5, où ledit moyen de commutation mentionné en dernier est placé entre ledit premier moyen de commutation mentionné en premier et ladite borne de connexion du bloc fonctionnel.

7. Système de commande numérique selon la revendication 1, où deux bus sont prévus, ledit bloc fonctionnel considéré étant connecté à l'un des bus et le moyen de commutation ayant pour fonction de connecter sélectivement l'autre des blocs fonctionnels à l'autre des bus, de manière à déconnecter électriquement ledit bloc fonctionnel considéré.

8. Système de commande numérique selon la revendication 1, où le moyen de commutation s'interpose entre ledit bloc fonctionnel considéré et le bus et est conçu pour s'ouvrir ou déconnecter ledit bloc fonctionnel considéré vis-à-vis du bus.

## Patentansprüche

1. Digitales Zweileitungs-Steuerbussystem (B1, B2), enthaltend

   eine Taktleitung (SCL) und eine Datenleitung (SDA) zum Verbinden von Funktionsblöcken (1, 2, 3) eines audiovisuellen elektronischen Geräts, um Steuerdaten zwischen diesen Funktionsblöcken zu übertragen,

   und an dem digitalen Zweileitungs-Steuerbus vorgesehene Schaltmittel (1a, 1b) zum Abtrennen wenigstens eines der Funktionsblöcke von dem digitalen Zweileitungs-Steuerbus.

2. Digitales Steuerbussystem nach Anspruch 1, bei dem die Schaltmittel in Abhängigketi von einer Hauptstromversorgung gesteuert werden, die an wenigstens einem der Funktionsblöcke anliegt.

3. Digitales Steuerbussystem nach Anspruch 1 oder 2, bei der das elektronische Gerät einen ersten und einen zweiten Steuerbus aufweist und die Schaltmittel das Umschalten wenigstens eines Funktionsblocks von dem ersten auf den zweiten Steuerbus bewirken.

4. Digitales Steuerbussystem nach Anspruch 3, bei dem wenigstens ein Funktionsblock die genannten Schaltmittel enthält, die zwischen einem Bus-Interface und in dem Funktionsblock vorgesehenen Verbindungsanschlüssen angeordnet sind.

5. Digitales Steuerbussystem nach Anspruch 4, bei dem wenigstens ein Funktionsblock außerdem Schaltmittel enthält, die den ersten Steuerbus mit dem zweiten Steuerbus verbinden.

6. Digitales Steuerbussystem nach Anspruch 5, bei dem die letztgenannten Schaltmittel zwischen den erstgenannten Schaltmitteln und den Verbindungsanschlüssen des Funktionsblocks angeordnet sind.

7. Digitales Steuerbussystem nach Anspruch 1, bei dem zwei Busse vorgesehen sind und der wenigstens eine Funktionsblock mit einem der Busse verbunden ist, und bei dem die Schaltmittel so betätigbar sind, daß sie den anderen der Funktionsblöcke selektiv mit dem anderen Bus verbinden und dadurch den wenigstens einen Funktionsblock elektrisch abtrennen.

8. Digitales Steuerbussystem nach Anspruch 1, bei dem die Schaltmittel zwischen dem wenigstens einen Funktionsblock und dem Bus liegen und so angeordnet sind, daß sie den wenigstens einen Funktionsblock von dem Bus abtrennen.

# FIG. 1

SUB-POWER 5V    MAIN POWER 5V

CHAN SEL MICRO-PROCESSOR    1

NON-VOLATILE MEMORY    2

SIGNAL PROCESSING IC    3

1b — BUS-INTFC    2b — BUS-INTFC

SDA    SCL    SDA    SCL

1a    2a

MODE

SCL1

SDA1

B1

SCL 2

B2    SDA 2

EP 0 211 554 B1

# FIG.2

EP 0 211 554 B1

# FIG.3

# FIG.4